# EUROPEAN PATENT SPECIFICATION

(11) **EP 3 389 222 B1**
(45) Date of publication and mention of the grant of the patent: **02.06.2021**
(21) Application number: 17166623.3
(22) Date of filing: 13.04.2017
(51) Int. Cl.: H04L 12/26, G06F 9/54

(54) **A METHOD AND A HOST FOR MANAGING EVENTS IN A NETWORK THAT ADAPTS EVENT-DRIVEN PROGRAMMING FRAMEWORK**
VERFAHREN UND HOST ZUR VERWALTUNG VON EREIGNISSEN IN EINEM NETZWERK, DAS EREIGNISGESTEUERTE PROGRAMMIERUNGSRAHMEN ANNIMMT
PROCÉDÉ ET HÔTE DE GESTION D'ÉVÉNEMENTS DANS UN RÉSEAU ADOPTANT UN CADRE DE PROGRAMMATION COMMANDÉE PAR LES ÉVÉNEMENTS

(43) Date of publication of application: 17.10.2018
(73) Proprietor: Nokia Solutions and Networks Oy, 02610 Espoo (FI)
(72) Inventor: Akkus, Istemi, 70435 Stuttgart (DE); Rimac, Ivica, 70435 Stuttgart (DE); Chen, Ruichuan, 70435 Stuttgart (DE)
(74) Representative: Louis Pöhlau Lohrentz

(56) References cited:
- STEPHEN MARZ ET AL: "Reducing Power Consumption and Latency in Mobile Devices Using an Event Stream Model", ACM TRANSACTIONS ON EMBEDDED COMPUTING SYSTEMS, ACM, NEW YORK, NY, US, vol. 16, no. 1, 13 October 2016 (2016-10-13), pages 1-24, XP058298751, ISSN: 1539-9087, DOI: 10.1145/2964203
- CHRISTIAN POELLABAUER ET AL: "Flexible cross-domain event delivery for quality-managed multimedia applications", ACM TRANSACTIONS ON MULTIMEDIA COMPUTING COMMUNICATIONS ANDAPPLICATIONS, ASSOCIATION FOR COMPUTING MACHINERY, US, vol. 1, no. 3, 1 August 2005 (2005-08-01), pages 248-268, XP058193812, ISSN: 1551-6857, DOI: 10.1145/1083314.1083316
- RODRIGO N CALHEIROS ET AL: "CloudSim: a toolkit for modeling and simulation of cloud computing environments and evaluation of resource provisioning algorithms", 20110101, vol. 41, no. 1, 1 January 2011 (2011-01-01), pages 23-50, XP007917900, DOI: 10.1002/SPE.995 [retrieved on 2010-08-24]

## Description

### Field of the invention

The invention relates to network technology, in particular to a method and a host for managing events in a network that adopts event-driven programming framework.

### Background

In a network adopting the serverless computing model, resources are utilized based on demand from the applications. The developers are charged by the amount of computing resources they use (i.e., CPU and memory) during the amount of time their code is running, usually at a second granularity. Adopting the serverless computing model can reduce the costs for developers and enable cloud providers to increase their utilization of resources.

To take advantage of this model, developers usually have to write their applications following an event-driven programming model, where functions of the application are triggered by events happening in the system, such as the upload of an image to server storage or a specific HTTP action by the end user. While this programming model makes developing applications easier by following a "simple-condition corresponding to a simple-action" paradigm.

Some examples of event-driven programming frameworks in the cloud are Amazon Lambda, Google Cloud Functions, Azure Functions and IBM Openwhisk. These systems provide developers with various triggers, including events associated with file storage, HTTP requests, timers and database updates. These systems are designed and promoted for simple scenarios, in which a single trigger can cause one or more short-living functions start executing.

These systems may consider data locality, so that the functions are instantiated at hosts that are close to the hosts storing the data. It is also possible in these systems to create chains of functions, in which one function invocation creates an event triggering another function and so on.

STEPHEN MARZ ET AL: "Reducing Power Consumption and Latency in Mobile Devices Using an Event Stream Model", ACM TRANSACTIONS ON EMBEDDED COMPUTING SYSTEMS, ACM, NEW YORK, NY, US, vol.16, no. 1, 13 October 2016 (2016-10-13), pages 1-24, XP058298751 discloses an ESM model implemented in the kernel wherein polling loops are eliminated and events are forwarded to an event handler in the kernel which in turn immediately sends events to the application where the event is either handled or queued onto the application's private queue.

### Summary of the Invention

According to the state of the art, the types of applications that can be developed are limited: applications requiring sequential invocations of several functions can experience increased delays. These delays can be imposed due to the functions triggering each other and sharing/passing application data through a global event queue. An object of the present invention is to enable the developers to reduce the latency between sequential function invocations.

The object of the invention is achieved by the methods and apparatus in the claims.

According to one aspect of the invention, there is provided a method of managing events in a network that adopts event-driven programming framework,
the network comprising: a plurality of physically distributed hosts, each of which is configured to process at least one event in the network, at least a first entity, configured to maintain a first queue comprising a first plurality of events to be processed by at least one host belonging to a first group of host(s), and at least a second entity, configured to maintain a second queue comprising a second plurality of events to be processed by at least one host belonging to a second group of host(s), wherein, the first group of host(s) comprises the second group of host(s);
and the hosts are categorized into groups according to their geographical location or logical criteria, wherein, the first queue is a higher level queue comparing to the second queue, and wherein the event is retrieved from a higher level queue to a lower level queue, until the event is retrieved to a host and processed on the host;
the method comprising steps of: a) determining a first event in the first queue as an event that is to be processed; b) determining whether the first event satisfies a first condition, the first condition indicating that the first event can be processed by at least a first host belonging to the second group of host(s); b1) if so, retrieving the first event from the first queue to the second queue, c) processing the first event on the first host, d) receiving a report of a second event that is newly generated by processing the first event on the first host; e) determining whether the second event satisfies a second condition, the second condition indicating that the second event can be processed by at least a second host belonging to the second group of host(s), e1) placing the second event to the second queue and then processing the second event at the second host, if the second event satisfies the second condition; e2) reporting the second event to the first entity maintaining the first queue, if the second event does not satisfy the second condition.

In a preferred embodiment, the second group of host comprises only one host, the first host and the second host being the same, and the second queue being a local queue of the host.

In a preferred embodiment, the first condition further includes that a first function that is executed to process the first event is locally stored on the first host, and the second condition further includes that a second function that is executed to process the second event is locally stored on the second host.

The present invention provides a shortcut for events that trigger subsequent event to be processed, such that the delay in processing the subsequent event is reduced. As a result, web applications with low-latency requirements can take advantage of the serverless model (i.e., easier orchestration, management, more cost savings) without paying latency penalties.

In a preferred embodiment, the method further comprises steps of: e3) placing the second event and a status indicator of the second event to the first queue, if the second event satisfies the second condition, wherein, the status indicator indicates to which extent the second group of host(s) has processed the second event, the step a) further comprising steps of: a1) determining to which extent the second group of host(s) has processed the second event based on the status indicator of the second event, a11) preventing the second event in the first queue from being determined as an event that is to be processed, if the status indicator of the second event indicates that the second group of host(s) is still processing the second event or the second group of host(s) has successfully processed the second event; a12) determining the second event in the first queue as an event that is to be processed, if the status indicator of the second event indicates that the second group of host(s) cannot successfully process the second event.

In a preferred embodiment, the status indicator indicates at least one of: 1) whether the first host has started with processing the second event, 2) whether the writing of a output data has started, 3) whether the first host has finished with processing the second event.

By providing a backup copy of the second event in the higher level queue, the reliability of processing the event is ensured. In case of failure of the second group of host(s), the second event will not be lost and can be processed by another host.

In a preferred embodiment, the step c) further comprises: c1) generating a first output data. The step d) further comprises: d1) receiving the first output data. The method further comprises steps of: e4) storing the first output data on a second data storage that is local to the second group of host(s), if the second event satisfies the second condition; e5) forwarding the first output data to a first data storage that is local to the first group of hosts, if the second event does not satisfy the second condition.

In a preferred embodiment, the step e1) further comprises: generating a second output data after processing the second event the at the second host; the step e3) comprising storing the second output data on the first queue as a status indicator of the second event indicating the processing of the first event has finished.

In a preferred embodiment, the method further comprises a step of: e6) storing the first output data on the first data storage that is local to the first group of hosts, if the second event satisfies the second condition.

Similarly, there is provided a backup copy of the first output data. In case of failure of the first host, the first output data will not be lost and may still be used by another host as input data to process the second event.

In a preferred embodiment, the method further comprises a step of: retrieving the first output data and using the first output data to process the second event.

In a preferred embodiment, the method further comprises steps of: generating metadata from the first output data, writing the generated metadata of the first output data to the first queue as a status indicator of the first event before step e6) to indicate the writing of the first output data is starting.

In a preferred embodiment, if the second group of host(s) has failed in successfully processing the first event, the method further comprises steps of: g) determining whether the metadata of the first output data has been set in the first queue, if so, performing steps h)-j); h) retrieving the first output data from the first data storage and the metadata of the first output data from the first queue; i) determining a metadata based on the first output data retrieved from the first data storage, and j) comparing the metadata determined based on the first output data retrieved from the first data storage and the metadata retrieved from the first queue: j1) if there is a match, setting a status indicator of the first event as the processing of the first event has finished; j2) if there is no match, the method going back to step a), determining the first event in the first queue as an event that shall be processed.

In a preferred embodiment, the method further comprises a step before the step b): determining a workflow of the first event, the workflow indicating a subsequent event that will be generated by processing the first event; the first condition further including that the subsequent event can be processed by at least a second host belonging to the second group of host(s).

The use of hierarchical queues also enables different code/function distribution mechanisms, so that code co-location of frequently interacting functions (i.e., functions in a sequence) is also considered for a variety of web applications (as opposed to today's approach of only considering code/data locality, i.e., code being put in the vicinity of the data it operates on). These mechanisms can focus on optimizing delays in applications as well as resource utilization in cloud infrastructure.

In addition, having multiple levels of queues for messages/events as well as for data enables the cloud operator to separate the infrastructure into distinct clusters, such as different groups of computers being only used for the higher level queue and others being only used for the computation. This separation enables more modularity in maintenance and failure isolation in the cloud infrastructure operating such an event-driven computing framework.

Additionally, the co-location of functions frequently interacting with each other would lead to reuse of the application data that is shared among different functions through the local data layer, further reducing the latency in the processing of the messages/events and ultimately improving application performance.

According to another aspect of the present invention, there is provided a host in a network that adopts event-driven programming framework, wherein, the host subscribes to a first queue and is configured to: a) determine a first event in the first queue as an event that is to be processed; b) determine whether the first event can be processed by the host; b1) if so, the host being further configured to retrieve the first event from the first queue to a local queue of the host; c) process the first event on the host; d) generate a second event as a result of processing the first event on the host; e) determine whether the second event can be processed by the host; e1) if so, the host being further configured to place the second event to the local queue of the host and then process the second event on the host, e2) if not so, the host being further configured to report the second event to an entity maintaining the first queue.

In a preferred embodiment, the host is further configured to: generate a status indicator for the second event and report the second event together with the status indicator to entity maintaining the first queue, if the second event can be processed by the host, the status indicator indicating to which extent the host has processed the second event.

### Brief description of the figures

The features and advantages of the invention will be more completely understood by appreciating the following detailed description of preferred embodiments with reference to the figures, wherein
- Fig. 1: depicts a schematic block diagram illustrating a network 100 according to an embodiment of the invention;
- Fig. 2: depicts a flow chart illustrating a method according to an embodiment of the invention;
- Fig. 3: depicts a flow chart of a method according to a preferred embodiment of the present invention;
- Fig. 4: depicts a flow chart of the method of recovery from a failover according to the present invention.

### Detailed description

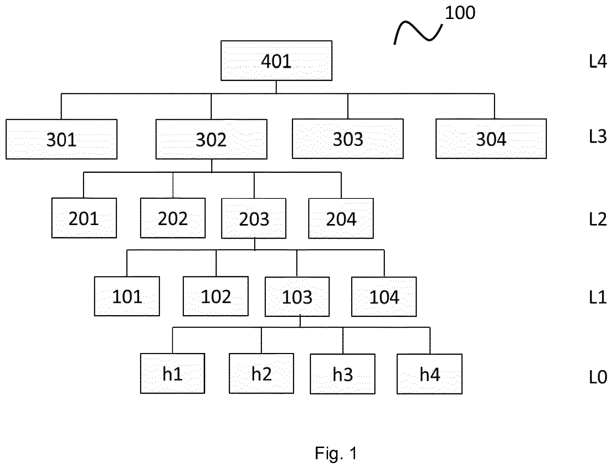

Figure 1 shows a schematic block diagram illustrating a network 100 according to an embodiment of the invention.

The network 100 comprises a plurality of physically distributed hosts each of which has a data storage and a processor coupled to the data storage and configured to process at least one event in the network. For simplicity, only four hosts h1, h2, h3 and h4 are shown in Fig 1. A skilled person shall understand, the number of the hosts comprised in the network is not limited to the given example.

In a preferred embodiment, a host may execute the function code that is originally stored on its data storage to process an event in the network. In another implementation, a host may extract the function code from the data storage of another host, and then execute the extracted function code to process an event in the network. A host may be configured to process more than one event in the network.

The hosts in the network may be categorized into different groups. The hosts are categorized according to their geographical location. For example, the hosts h1, h2, h3 and h4 may belong to one rack 103. A data center may comprise a plurality of racks. For example, the data center 203 may comprise racks 101, 102, 103 and 104. There may be a plurality of data centers 201, 202, 203 and 204 in a geographical region 302. There may be a plurality of geographical regions 301, 302, 303 and 304 in a higher level geographical region 401.

The criterion that is used to categorize the hosts is not limited to the given example. The hosts are also categorized according to logical criteria. For simplicity, in the following, the embodiments of the present invention are going to be described assuming the hosts are categorized according to their geographical location as described above.

Specifically, in the embodiment shown in Fig. 1, each of the hosts maintains a local queue L0 respectively. The local queue L0 each comprises a plurality of events that shall be processed by the respective host. There is an entity in each of the racks maintaining a queue of level 1 L1 respectively. The L1 queue each comprises a plurality of events that shall be processed by the hosts comprised in the respective rack. There is an entity in each of the data centers maintaining a queue of level 2 L2 respectively. The L2 queue each comprises a plurality of events that shall be processed by the hosts comprised in the respective data center. There is an entity in each of the geographical regions maintaining a queue of level 3 L3 respectively. The L3 queue each comprises a plurality of events that shall be processed by the hosts comprised in the respective geographical region. There is an entity in each of the higher level geographical regions maintaining a queue of level 4 L4 respectively. The L4 queue comprises a plurality of events that shall be processed by the hosts comprised in the higher level geographical region 401.

Events are retrieved from a higher level queue to a lower level queue according to the method that will be described in the following, until the event is retrieved to a host and processed on the host. For example, the entity in the geographical region 302 may retrieve a first event from the L4 queue maintained by the entity in higher level geographical region 401 and put the first event in the L3 queue maintained by the entity in the geographical region 302. The entity in the data center 203 may retrieve the first event from the L3 queue maintained by the entity in the geographical region 302 and put the first event in the L2 queue maintained by the entity in the data center 203. The entity in the rack 103 may retrieve the first event from the L2 queue maintained by the entity in the data center 203 and put the first event in the L1 queue maintained by the entity in the rack 103. The first host h1 may retrieve the first event from the L1 queue maintained by the entity in the rack 103 and put the first event in the local queue L0 of the first host h1.

The processing of an event is performed by a host. Different functions are executed to process different events. The functions are preferably stored on the hosts. In one exemplary example, a first function that is executed to process the first event is locally stored on the first host h1, and the processing of the first event is performed on the first host h1. A second event may be generated by executing the first function on the first host h1. The first host h1 may report the second event to the entity in the rack 103. The entity in the rack 103 may report the second event to the entity in the data center 203. The entity in the data center 203 may report the second event to the entity in the geographical region 302. The entity in the geographical region 302 may report the second event to the entity in the higher level geographical region 401.

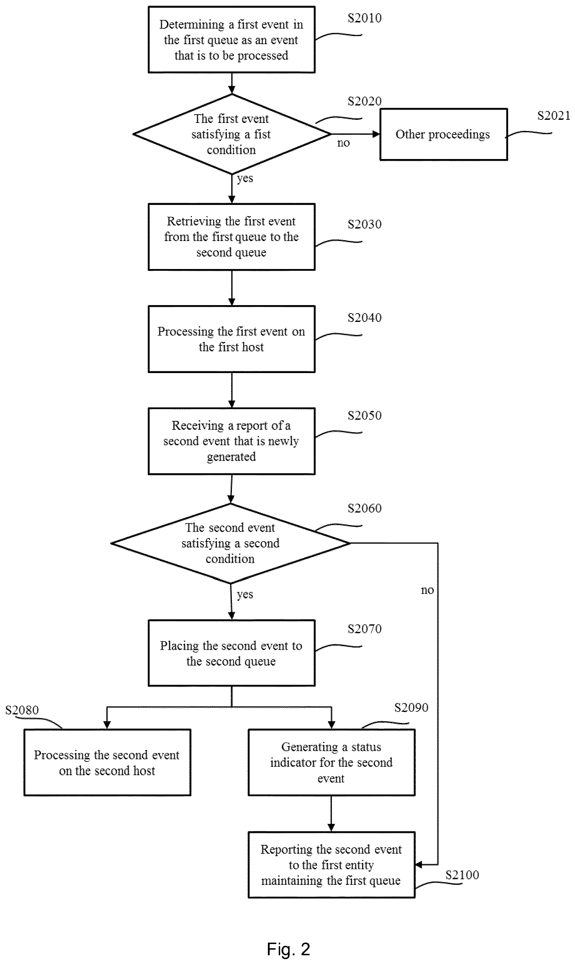

Considering a first queue as a lower level queue, a second queue as a higher level queue, it can be generalized that the network 100 further comprises at least a first entity, configured to maintain a first queue comprising a first plurality of events to be processed by at least one host belonging to a first group of host(s), and at least a second entity, configured to maintain a second queue comprising a second plurality of events to be processed by at least one host belonging to a second group of host(s). The first group of host(s) comprises the second group of host(s), i.e. the second group of host(s) is part of the first group of host(s). The entity can be a host or a logical entity. The events in the network can be managed according to the method described in the following with respect to Fig.2.

Fig. 2 depicts a flow chart illustrating a method according to an embodiment of the invention.

In step S2010, a first event in the first queue is determined as an event that is to be processed. The first queue comprises a first plurality of events to be processed by at least one host belonging to a first group of host(s). In one embodiment referring to Fig. 1, the first queue may be L3 queue maintained by the entity in the geographical region 302, and the first group of hosts may be all the hosts belonging to the geographical region 302.

In step S2020, it is determined whether the first event satisfies a first condition, the first condition indicating that the first event can be processed by at least a first host belonging to the second group of host(s). In a preferred embodiment, the first condition further includes that a first function that is executed to process the first event is locally stored on the first host. If the first event satisfies the first condition, the method proceeds with the step S2030. If the first event does not satisfy the first condition, the method proceeds with other proceedings in step S2021. The other proceedings may be performed to find a host that can process the first event from the first group of host(s), the details of the other proceeding in step S2021 will not be elaborated here for simplicity.

In step S2030, the first event is retrieved from the first queue to the second queue. The second queue comprises a second plurality of events to be processed by at least one host belonging to a second group of host(s).

In an example described referring to Fig. 1, the first queue may be L2 queue maintained by the entity in the data center 203, the second queue may be L1 queue maintained by the rack 103, the first group of hosts may refer to all the hosts belonging to the data center 203, and the second group of hosts may refer to all the hosts belonging to the rack 103 in the data center 203. The first condition for retrieving the first event from the L2 queue maintained by the entity in the data center 203 to the L1 queue maintained by the entity in the rack 103 is that the first event can be processed by at least a first host h1 belonging to the rack 103.

Still referring to Fig.1, the first event may be retrieved from the L4 queue to the L3 queue, from the L3 queue to the L2 queue, from the L2 queue to the L1 queue or from the L1 queue to the L0 queue. A skilled person shall understand, one or more of the above mentioned layers may be omitted. In one example, the first event may be retrieved from L2 queue directly to L0 queue, if the L1 queue is omitted.

Then in step S2040, the first event is processed on the first host h1. A skilled person shall understand that if the second queue is already the local queue L0 of a host, the first event can be directly processed on the host maintaining the local queue L0. If the second queue is L1 queue or higher level queue, steps similar to S2020-S2030 may be performed between step S2030 and step S2040 to retrieve the first event to a lower level queue until the first event arrives at the local queue L0.

In step S2050, a report of a second event that is newly generated by processing the first event on the first host is received. A skilled person shall understand that if the second queue is already the local queue L0 of the first host, the second event is generated on the first host, for example in a first function module, then the first function module may report the second event to the entity maintaining the local queue L0 in the first host. If the second queue is L1 queue or higher level queue, the report of the second event is received from the entity maintaining a lower level queue.

In step S2060, it is determined whether the second event satisfies a second condition, the second condition indicating that the second event can be processed by at least a second host belonging to the second group of host(s). In one embodiment, the second condition further includes that a second function that is executed to process the second event is locally stored on the second host.

Still referring to Fig. 1, if the second queue is already the local queue L0 of the first host h1, the first host h1 is the only one host in the second group of host. In that case, the second condition is that the second event can be processed by the first host.

In another example referring to Fig. 1, the second queue is L1 queue maintained by an entity in the rack 103, and a report of the second event is received from the first host h1. In that case, the second condition is that the second event can be processed by the other hosts belongs to the rack 103, i.e. h2, h3 or h4.

If the second event satisfies the second condition, the method proceeds with the step S2070. If the second event does not satisfy the second condition, the method directly proceeds with the step S2100.

In step S2070, the second event is placed to the second queue, and then in step S2080 the second event is processed at the second host.

In an example where the second queue is L1 queue or higher level queue, steps similar to steps S2010-S2030 may be performed between step S2070 and step S2080 to retrieve the second event to the local queue L0 of the second host that can process the second event.

In an example where the second queue is local queue L0 of the first host h1, the second event is processed on the first host h1 in step S2080.

In step S2090, a status indicator is generated for the second event. The step S2090 may be performed in parallel to the step S2080 or after the step S2080. The status indicator indicates to which extent the second group of host(s) has processed the second event. The status indicator indicates at least one of: 1) whether the first host has started with processing the second event, 2) whether the writing of a output data has started, 3) whether the first host has finished with processing the second event.

In one embodiment of the present invention, a second output data may be generated by processing the second event. The second output data may be written as a status indicator, indicating the processing of the second event has finished. In that case, step S2090 is performed after step S2090.

In step S2100, the second event is reported to the first entity maintaining the first queue. After the first entity receives the second event, the steps S2060-S2100 may be similarly performed on the first entity. If the second event can be processed by at least one host belonging to the first group of host(s), the second event is placed to the first queue. If not, the second event may be further reported to an entity maintaining a higher level queue.

For example, the second event that is generated at the first host h1 may be reported to the entity in the rack 103 if the second event cannot be processed by the first host h1. The entity in the rack 103 may further report the second event to the entity in the data center 203, if the second event cannot be processed by any other host belonging to the rack 103, i.e. the host h2, h3, and h4. The entity in the data center 203 may further report the second event to the entity in the geographical region 302, if the second event cannot be processed by any host belonging to the data center 203.

In an embodiment, if the second event does not satisfy the second condition, the second event is reported to the first entity maintaining the first queue without any status indicator, or in another embodiment, with a status indicator indicating that the second group of host(s) cannot successfully process the second event.

In another embodiment, even if the second event satisfies the second condition, the second event is still reported to the first entity maintaining the first queue together with its status indicator. In this manner, a back up may be provided for the situation of failover. However, if the second event is being processed by the second group of host(s) or the second group of host(s) has successfully processed the second event, the other hosts in the first group of hosts shall not process the second event. Only when the second group of host(s) cannot successfully process the second event, e.g. host fails, the other hosts in the first group of hosts may process the second event.

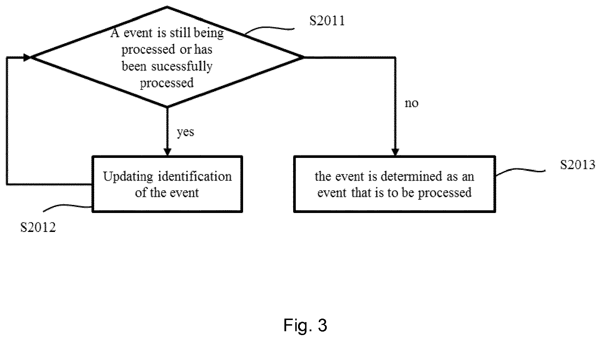

Fig. 3 shows a flow chart of a method according to a preferred embodiment of the present invention.

According to Fig.3, the status indicator of the second event will be checked to determine whether the second event shall be determined as an event that shall be processed.

In step S2011, the status indicator of the second event will be checked to determine whether the status indicator of the second event indicates that the second group of host(s) is still processing the second event or the second group of host(s) has successfully processed the second event.

If so, the method proceeds with the step S2012. In step S2012, the identification of the event may be updated and the method goes back to step S2011 to check the status indicator of the next event. Detailed proceedings will not be elaborated here. The second event in the first queue is prevented from being determined as an event that is to be processed.

If not so, it suggests that the second group of host(s) cannot successfully process the second event. In that case, the method proceeds with the step S2013. In step S2013, the second event in the first queue is determined as an event that is to be processed similar to step S2010 as described with respect to Fig. 2.

A skilled person shall understand that after the second event is determined as an event that is to be processed in step S2013, the steps S2020-S2100 described above referring to Fig. 2 may be similarly performed for the second event.

A skilled person shall understand that the second event that is newly generated may also be considered as a normal event in the first queue as the first event. In the following, the examples of the present invention will be described with respect to the first event.

In one embodiment of the present invention, a first output data may be generated by processing the first event. The data storage in the network 100 may also be hierarchical, similar as the queues of different levels. The entity maintaining the queue in each level may be further configured to manage the data storage in each level. In another example, the network 100 may comprise another entity to manage the data storage in each level.

The step S2050 may further comprise receiving the first output data. A skilled person shall understand that if the second queue is already the local queue L0 of the first host, the first output data is generated on the first host, for example in a first function module, then the first function module may transmit the first output data to another entity maintaining the data storage of the first host. If the second queue is L1 queue or higher level queue, the first output data is received from the entity maintaining a lower level data storage or the entity maintaining the lower level queue.

In one example, the second event needs to be processed based on the first output data. Therefore, the first output data needs to be retrieved so that the second event can be processed using the first output data. In that case, the first output data shall be stored on or close to the host intended to process the second event.

The step S2070 may further comprise storing the first output data on a second data storage that is local to the second group of host(s). In an example where the second queue is already the local queue L0 of the first host, the first output data is stored one the data storage of the first host in step S2070. In an example where the second queue is L1 queue, in step S2070, the first output data is stored on the data storage that is local to all the hosts belonging to the rack 103. By doing so, the first output data can be retrieved with less latency.

The step S2100 may further comprise forwarding the first output data to a first data storage that is local to the first group of hosts. In an example, the first output data and the second event that are generated at the first host h1 may be forwarded to the entity in the rack 103 if the second event cannot be processed by the first host h1. The entity in the rack 103 may further forward the first output data and the second event to the entity in the data center 203, if the second event cannot be processed by any other host belonging to the rack 103, i.e. the host h2, h3, and h4. The entity in the data center 203 may further forward the first output data and the second event to the entity in the geographical region 302, if the second event cannot be processed by any host belonging to the data center 203.

In an embodiment, even if the second event satisfies the second condition, the first output data is still stored on the first data storage that is local to the first group of hosts. In this manner, a back up at a higher level data storage may be provided for the situation of failover.

In order to reduce unnecessary or redundant processing of an event during recovery from a failover, in a preferred embodiment of the present invention, any event may be accompanied by a status indicator indicating to which extent the event has been processed. In the following, the examples of the present invention will be described with respect to the first event.

In an example, the first output data is generated by processing the first event on the first host h1. Any algorithm, for example, hashing, may be used to generate metadata from the first output data. Then the generated metadata of the first output data will be written to the L1 queue maintained by the entity in the rack 103 as a status indicator of the first event, before storing the first output data on the data storage that is local to the hosts belonging to the rack 103 to indicate the writing of the first output data is starting.

In the following, one implementation will be described to elaborate the recovery from a failover according to the present invention.

Assume the first host h1 is now a defunct host. The first event that was retrieved from the L1 queue to the local queue L0 of the first host h1, however the status indicator of the first event in the first queue is not set as successfully processed. Alternatively, the first event may be generated on the first host h1 by processing a foregoing event, the first event is also placed into the L1 queue, and the status indicator of the first event in the first queue is not set as successfully processed.

The failure of the first host will be recognized by the entity in the rack 102 maintaining the L1 queue. As a result, another host (i.e., h3) will be assigned for the events that were previously belonging to the first h1.

The third host h3 is also able to process the first event. After the first host h1 fails, the third host retrieves the first event from the first queue if the status indicator of the first event in the first queue is not set as successfully processed.

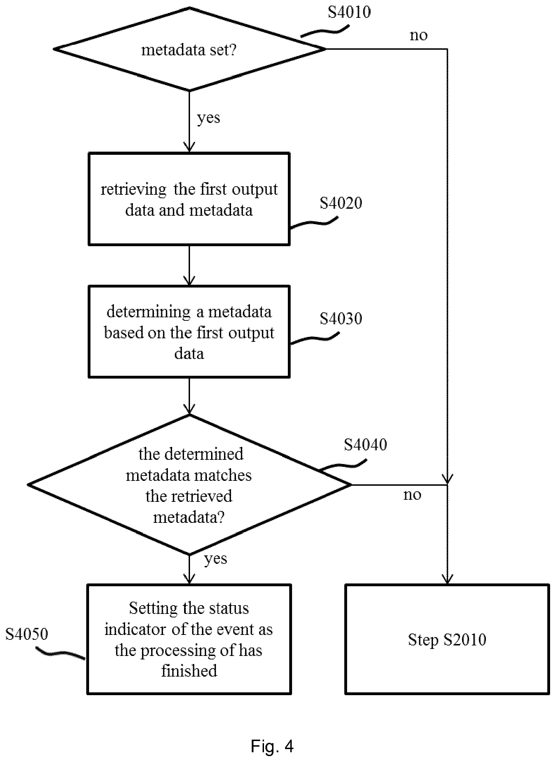

Fig. 4 depicts a flow chart of the method of recovery from a failover according to the present invention

In step S4010, it is determined whether the metadata of the first output data has been set in the first queue. If so, the method proceeds with step S4020. Otherwise it means the first host h1 could not set it before it failed. The third host h3 may determine the first event as an event that shall be processed as in step S2010, and then proceeds as described with respect to Fig. 2.

In step S4020, the first output data is retrieved from the data storage that is local to the hosts belonging to the rack 103, and the metadata of the first output data is retrieved from the L1 queue maintained by the entity in the rack 103.

In step S4030, a metadata is determined based on the first output data retrieved from the data storage that is local to the hosts belonging to the rack 103.

In step S4040, it is determined whether the metadata determined based on the first output data retrieved from the first data storage matches to the metadata retrieved from the first queue.

If there is a match, it means the first host h1 could successfully write the output data, but could not set the successful completion flag to indicate the execution has finished. In that case, the third host h3 sets the status indicator of the first event as the processing of the first event has finished in step S4050.

If there is no match, it means the first host h1 could not finish writing of the first output data. Therefore, it is not considered to have fully processed the first event, third host h3 determines the first event in the L1 queue as an event that shall be processed as in step S2010, and then proceeds as described with respect to Fig. 2.

If there is a plurality of events in the local queue of the first host h1 when it fails, the third host may investigate all the events that were in the local queue of h1. Once all old events from the defunct host's partition have been investigated, the third host h3 starts to process the events from the L1 queue as well as from the local queue L0.

The third host h3 were to crash in the middle of this process, then another host will take over the same partition. However, it will retrieve all events after the most recent updates to the status indicator. As a result, the number of events that need to be investigated during the recovery procedure will gradually decrease, even in the presence of multiple host failures.

Following the idea of the present invention, it is also helpful to determine a workflow of the first event, the workflow indicating a subsequent event that will be generated by processing the first event. With the help of the workflow, it is possible to choose a host or a group of hosts close to each other that can process the current event and any other event that may be subsequently generated by processing the current event. Latency caused by the transmission of the event may be further reduced.

In one embodiment, the first condition further includes that the subsequent event can be processed by at least a second host belonging to the second group of host(s), while retrieving the first event from the first queue to the second queue.

Following the idea of the present invention, it is also possible to configure the host or the group of host(s) according to the workflow, so that the events that are frequently occurring in sequence may be processed on the same host or the same group of hosts.

In one embodiment, the second group of host(s) is configured according to the workflow, so that the second group of host(s) can process the first event and the subsequent event(s) that will be generated by processing the first event.

According to another aspect of the present invention, the host h1 in the network 100 subscribes to a first queue L1. There is a local queue at the host h1. The first queue L1 may be a logically-centralized (but physically-distributed) global queue in the system. Host h1 subscribes to the global queue according to the functions it has locally available. The global queue is segmented into shards/partitions. Each subscribing host gets assigned one or more partitions in a mutually exclusive way (i.e., no two hosts get the same partitions).The host h1 is configured to:
a) determine a first event in the first queue L1 as an event that is to be processed;
b) determine whether the first event can be processed by the host h1;
b1) if so, the host h1 retrieves the first event from the first queue L1 to a local queue L0 of the host h1;
c) process the first event on the host h1;
d) generate a second event as a result of processing the first event on the host;
e) determine whether the second event can be processed by the host h1;
e1) if so, the host h1 places the second event to the local queue of the host h1 and then process the second event on the host h1,
e2) if not so, the host h1 reports the second event to an entity maintaining the first queue L1.

The host h1 may also generate a status indicator for the second event and report the second event together with the status indicator to the entity maintaining the first queue L1, if the second event can be processed by the host h1, the status indicator indicates to which extent the host h1 has processed the second event.

## Claims

1. A method of managing events in a network that adopts event-driven programming framework,
the network comprising:
a plurality of physically distributed hosts (h1, h2, h3, h4), each of which is configured to process at least one event in the network,
at least a first entity, configured to maintain a first queue comprising a first plurality of events to be processed by at least one host belonging to a first group of host(s), and at least a second entity, configured to maintain a second queue comprising a second plurality of events to be processed by at least one host belonging to a second group of host(s), wherein, the first group of host(s) comprises the second group of host(s), and the hosts are categorized into groups according to their geographical location or logical criteria, wherein, the first queue is a higher level queue comparing to the second queue, and wherein an event is retrieved from a higher level queue to a lower level queue, until the event is retrieved to a host and processed on the host;
the method comprising steps of:
a) determining (S2010) a first event in the first queue as an event that is to be processed;
b) determining (S2020) whether the first event satisfies a first condition, the first condition indicating that the first event can be processed by at least a first host belonging to the second group of host(s);
b1) if so, retrieving (S2030) the first event from the first queue to the second queue,
c) processing (S2040) the first event on the first host,
d) receiving (S2050) a report of a second event that is newly generated by processing the first event on the first host;
e) determining (S2060) whether the second event satisfies a second condition, the second condition indicating that the second event can be processed by at least a second host belonging to the second group of host(s),
e1) placing (S2070) the second event to the second queue and then processing (S2080) the second event at the second host, if the second event satisfies the second condition;
e2) reporting the second event to the first entity maintaining the first queue, if the second event does not satisfy the second condition.

2. A method according to claim 1, wherein, the second group of host comprises only one host, the first host and the second host being the same, and the second queue being a local queue of the host.

3. A method according to claim 1, wherein, the first condition further includes that a first function that is executed to process the first event is locally stored on the first host, and the second condition further includes that a second function that is executed to process the second event is locally stored on the second host.

4. A method according to claim 1, further comprising steps of:
e3) placing the second event and a status indicator of the second event to the first queue, if the second event satisfies the second condition,
wherein, the status indicator indicates to which extent the second group of host(s) has processed the second event,
the step a) further comprising steps of:
a1) determining to which extent the second group of host(s) has processed the second event based on the status indicator of the second event,
a11) preventing the second event in the first queue from being determined as an event that is to be processed, if the status indicator of the second event indicates that the second group of host(s) is still processing the second event or the second group of host(s) has successfully processed the second event;
a12) determining the second event in the first queue as an event that is to be processed, if the status indicator of the second event indicates that the second group of host(s) cannot successfully process the second event.

5. A method according to claim 4, wherein the status indicator indicates at least one of:
1) whether the first host has started with processing the second event,
2) whether the writing of a output data has started,
3) whether the first host has finished with processing the second event.

6. A method according to claim 1, the step c) further comprising:
c1) generating a first output data,
the step d) further comprising:
d1) receiving the first output data,
the method further comprising steps of:
e4) storing the first output data on a second data storage that is local to the second group of host(s), if the second event satisfies the second condition;
e5) forwarding the first output data to a first data storage that is local to the first group of hosts, if the second event does not satisfy the second condition.

7. A method according to claim 4, the step e1) further comprising:
- generating a second output data after processing the second event the at the second host;
the step e3) comprising storing the second output data on the first queue as a status indicator of the second event indicating the processing of the first event has finished.

8. A method according to claim 6, further comprising a step of:
e6) storing the first output data on the first data storage that is local to the first group of hosts, if the second event satisfies the second condition.

9. A method according to claim 6, further comprising a step of:
- retrieving the first output data and using the first output data to process the second event.

10. A method according to claim 8, further comprising steps of:
- generating metadata from the first output data,
- writing the generated metadata of the first output data to the first queue as a status indicator of the first event before step e6) to indicate the writing of the first output data is starting.

11. A method according to claim 10, if the second group of host(s) has failed in successfully processing the first event, the method further comprising steps of:
g) determining (S4010) whether the metadata of the first output data has been set in the first queue, if so, performing steps h)-j);
h) retrieving (S4020) the first output data from the first data storage and the metadata of the first output data from the first queue;
i) determining (S4030) a metadata based on the first output data retrieved from the first data storage, and
j) comparing (S4040) the metadata determined based on the first output data retrieved from the first data storage and the metadata retrieved from the first queue:
j1) if there is a match, setting (S4050) a status indicator of the first event as the processing of the first event has finished;
j2) if there is no match, the method going back to step a), determining the first event in the first queue as an event that shall be processed.

12. A method according to any one of claims 1-10, further comprising a step before the step b):
- determining a workflow of the first event, the workflow indicating a subsequent event that will be generated by processing the first event;
the first condition further including that the subsequent event can be processed by at least a second host belonging to the second group of host(s).

13. A method according to any one of claims 1-10, further comprising steps of:
- determining a workflow of the first event, the workflow indicating a subsequent event that will be generated by processing the first event;
- configuring the second group of host(s) according to the workflow, so that the second group of host(s) can process the first event and the subsequent event that will be generated by processing the first event.

14. A host (h1, h2, h3, h4) in a network that adopts event-driven programming framework, wherein, the host subscribes to a first queue and is configured to:
a) determine a first event in the first queue as an event that is to be processed;
b) determine whether the first event can be processed by the host (h1, h2, h3, h4); b1) if so, the host (h1, h2, h3, h4) being further configured to retrieve the first event from the first queue to a local queue of the host (h1, h2, h3, h4);
c) process the first event on the host (h1, h2, h3, h4);
d) generate a second event as a result of processing the first event on the host (h1, h2, h3, h4);
e) determine whether the second event can be processed by the host (h1, h2, h3, h4);
e1) if so, the host (h1, h2, h3, h4) being further configured to place the second event to the local queue of the host (h1, h2, h3, h4) and then process the second event on the host (h1, h2, h3, h4),
e2) if not so, the host (h1, h2, h3, h4) being further configured to report the second event to an entity maintaining the first queue.

15. A host (h1, h2, h3, h4) according to claim 14, further configured to:
generate a status indicator for the second event and report the second event together with the status indicator to entity maintaining the first queue, if the second event can be processed by the host (h1, h2, h3, h4),
the status indicator indicating to which extent the host (h1, h2, h3, h4) has processed the second event.

## Patentansprüche

1. Verfahren zum Verwalten von Ereignissen in einem Netzwerk, das einen ereignisgesteuerten Programmierrahmen einsetzt,
wobei das Netzwerk Folgendes umfasst:
eine Vielzahl von physisch verteilten Hosts (h1, h2, h3, h4), von denen jeder dazu ausgelegt ist, mindestens ein Ereignis im Netzwerk zu verarbeiten,
mindestens eine erste Entität, die dazu ausgelegt ist, eine erste Warteschlange zu führen, die eine erste Vielzahl von Ereignissen umfasst, die von mindestens einem Host zu verarbeiten sind, der zu einer ersten Gruppe von einem oder mehreren Hosts gehört, und mindestens eine zweite Entität, die dazu ausgelegt ist, eine zweite Warteschlange zu führen, die eine zweite Vielzahl von Ereignissen umfasst, die von mindestens einem Host zu verarbeiten sind, der zu einer zweiten Gruppe von einem oder mehreren Hosts gehört, wobei die erste Gruppe von einem oder mehreren Hosts die zweite Gruppe von einem oder mehreren Hosts umfasst und die Hosts gemäß ihrem geografischen Standort oder logischen Kriterien in Gruppen kategorisiert sind, wobei die erste Warteschlange verglichen mit der zweiten Warteschlange eine Warteschlange einer höheren Ebene ist und wobei ein Ereignis aus einer Warteschlange einer höheren Ebene in eine Warteschlange einer niedrigeren Ebene abgerufen wird, bis das Ereignis zu einem Host abgerufen und auf dem Host verarbeitet wird;
wobei das Verfahren die folgenden Schritte umfasst:
a) Bestimmen (S2010) eines ersten Ereignisses in der ersten Warteschlange als ein Ereignis, das zu verarbeiten ist;
b) Bestimmen (S2020), ob das erste Ereignis eine erste Bedingung erfüllt, wobei die erste Bedingung anzeigt, dass das erste Ereignis von mindestens einem ersten Host verarbeitet werden kann, der zur zweiten Gruppe von einem oder mehreren Hosts gehört;
b1) wenn ja, Abrufen (S2030) des ersten Ereignisses aus der ersten Warteschlange in die zweite Warteschlange,
c) Verarbeiten (S2040) des ersten Ereignisses auf dem ersten Host,
d) Empfangen (S2050) eines Berichts eines zweiten Ereignisses, das durch Verarbeiten des ersten Ereignisses auf dem ersten Host neu erzeugt wird;
e) Bestimmen (S2060), ob das zweite Ereignis eine zweite Bedingung erfüllt, wobei die zweite Bedingung anzeigt, dass das zweite Ereignis von mindestens einem zweiten Host verarbeitet werden kann, der zur zweiten Gruppe von einem oder mehreren Hosts gehört,
e1) Platzieren (S2070) des zweiten Ereignisses in der zweiten Warteschlange und dann Verarbeiten (S2080) des zweiten Ereignisses am zweiten Host, wenn das zweite Ereignis die zweite Bedingung erfüllt;
e2) Melden des zweiten Ereignisses bei der ersten Entität, die die erste Warteschlange führt, wenn das zweite Ereignis die zweite Bedingung nicht erfüllt.

2. Verfahren nach Anspruch 1, wobei die zweite Gruppe von Host nur einen Host umfasst, wobei der erste Host und der zweite Host derselbe ist und wobei die zweite Warteschlange eine lokale Warteschlange des Hosts ist.

3. Verfahren nach Anspruch 1, wobei die erste Bedingung ferner beinhaltet, dass eine erste Funktion, die ausgeführt wird, um das erste Ereignis zu verarbeiten, lokal auf dem ersten Host gespeichert ist, und die zweite Bedingung ferner beinhaltet, dass eine zweite Funktion, die ausgeführt wird, um das zweite Ereignis zu verarbeiten, lokal auf dem zweiten Host gespeichert ist.

4. Verfahren nach Anspruch 1, das ferner die folgenden Schritte umfasst:
e3) Platzieren des zweiten Ereignisses und einer Statusanzeige des zweiten Ereignisses in der ersten Warteschlange, wenn das zweite Ereignis die zweite Bedingung erfüllt,
wobei die Statusanzeige anzeigt, in welchem Umfang die zweite Gruppe von einem oder mehreren Hosts das zweite Ereignis verarbeitet hat,
wobei der Schritt a) ferner die folgenden Schritte umfasst:
a1) Bestimmen auf Basis der Statusanzeige des zweiten Ereignisses, in welchem Umfang die zweite Gruppe von einem oder mehreren Hosts das zweite Ereignis verarbeitet hat,
a11) Verhindern, dass das zweite Ereignis in der ersten Warteschlange als ein Ereignis bestimmt wird, das zu verarbeiten ist, wenn die Statusanzeige des zweiten Ereignisses anzeigt, dass die zweite Gruppe von einem oder mehreren Hosts das zweite Ereignis noch verarbeitet oder die zweite Gruppe von einem oder mehreren Hosts das zweite Ereignis erfolgreich verarbeitet hat;
a12) Bestimmen des zweiten Ereignisses in der ersten Warteschlange als ein Ereignis, das zu verarbeiten ist, wenn die Statusanzeige des zweiten Ereignisses anzeigt, dass die zweite Gruppe von einem oder mehreren Hosts das zweite Ereignis nicht erfolgreich verarbeiten kann.

5. Verfahren nach Anspruch 4, wobei die Statusanzeige mindestens eines von Folgendem anzeigt:
1) ob der erste Host mit dem Verarbeiten des zweiten Ereignisses begonnen hat,
2) ob das Schreiben von Ausgabedaten begonnen hat,
3) ob der erste Host das Verarbeiten des zweiten Ereignisses beendet hat.

6. Verfahren nach Anspruch 1, wobei der Schritt c) ferner Folgendes umfasst:
c1) Erzeugen von ersten Ausgabedaten,
wobei der Schritt d) ferner Folgendes umfasst:
d1) Empfangen der ersten Ausgabedaten,
wobei das Verfahren ferner die folgenden Schritte umfasst:
e4) Speichern der ersten Ausgabedaten in einem zweiten Datenspeicher, der lokal zur zweiten Gruppe von einem oder mehreren Hosts gehört, wenn das zweite Ereignis die zweite Bedingung erfüllt;
e5) Weiterleiten der ersten Ausgabedaten zu einem ersten Datenspeicher, der lokal zur ersten Gruppe von Hosts gehört, wenn das zweite Ereignis die zweite Bedingung nicht erfüllt.

7. Verfahren nach Anspruch 4, wobei der Schritt e1) ferner Folgendes umfasst:
- Erzeugen von zweiten Ausgabedaten nach dem Verarbeiten des zweiten Ereignisses am zweiten Host;
wobei der Schritt e3) das Speichern der zweiten Ausgabedaten in der ersten Warteschlange als eine Statusanzeige des zweiten Ereignisses, die anzeigt, dass das Verarbeiten des ersten Ereignisses abgeschlossen ist, umfasst.

8. Verfahren nach Anspruch 6, das ferner einen folgenden Schritt umfasst:
e6) Speichern der ersten Ausgabedaten im ersten Datenspeicher, der lokal zur ersten Gruppe von Hosts gehört, wenn das zweite Ereignis die zweite Bedingung erfüllt.

9. Verfahren nach Anspruch 6, das ferner einen folgenden Schritt umfasst:
- Abrufen der ersten Ausgabedaten und Verwenden der ersten Ausgabedaten zum Verarbeiten des zweiten Ereignisses.

10. Verfahren nach Anspruch 8, das ferner die folgenden Schritte umfasst:
- Erzeugen von Metadaten aus den ersten Ausgabedaten,
- Schreiben der erzeugten Metadaten der ersten Ausgabedaten in die erste Warteschlange als eine Statusanzeige des ersten Ereignisses vor Schritt e6), um anzuzeigen, dass das Schreiben der ersten Ausgabedaten beginnt.

11. Verfahren nach Anspruch 10, wobei das Verfahren, wenn die zweite Gruppe von einem oder mehreren Hosts das erste Ereignis nicht erfolgreich verarbeitet hat, ferner die folgenden Schritte umfasst:
g) Bestimmen (S4010), ob die Metadaten der ersten Ausgabedaten in der ersten Warteschlange eingestellt wurden, wenn ja, Durchführen der Schritte h)-j);
h) Abrufen (S4020) der ersten Ausgabedaten aus dem ersten Datenspeicher und der Metadaten der ersten Ausgabedaten aus der ersten Warteschlange;
i) Bestimmen (S4030) von Metadaten auf Basis der ersten Ausgabedaten, die aus dem ersten Datenspeicher abgerufen wurden, und
j) Vergleichen (S4040) der Metadaten, die auf Basis der ersten Ausgabedaten, die aus dem ersten Datenspeicher abgerufen wurden, bestimmt wurden, und der Metadaten, die aus der ersten Warteschlange abgerufen wurden:
j1) wenn eine Übereinstimmung besteht, Einstellen (S4050) einer Statusanzeige des ersten Ereignisses als abgeschlossene Verarbeitung des ersten Ereignisses;
j2) wenn keine Übereinstimmung besteht, Zurückkehren des Verfahrens zu Schritt a) und Bestimmen des ersten Ereignisses in der ersten Warteschlange als ein Ereignis, das zu verarbeiten ist.

12. Verfahren nach einem der Ansprüche 1 bis 10, das vor dem Schritt b) einen folgenden Schritt umfasst:
- Bestimmen eines Arbeitsablaufs des ersten Ereignisses, wobei der Arbeitsablauf ein nachfolgendes Ereignis anzeigt, das durch Verarbeiten des ersten Ereignisses erzeugt wird;
wobei die erste Bedingung ferner beinhaltet, dass das nachfolgende Ereignis von mindestens einem zweiten Host, der zur zweiten Gruppe von einem oder mehreren Hosts gehört, verarbeitet werden kann.

13. Verfahren nach einem der Ansprüche 1 bis 10, das ferner die folgenden Schritte umfasst:
- Bestimmen eines Arbeitsablaufs des ersten Ereignisses, wobei der Arbeitsablauf ein nachfolgendes Ereignis anzeigt, das durch Verarbeiten des ersten Ereignisses erzeugt wird;
- Auslegen der zweiten Gruppe von einem oder mehreren Hosts gemäß dem Arbeitsablauf, derart, dass die zweite Gruppe von einem oder mehreren Hosts das erste Ereignis und das nachfolgende Ereignis, das durch Verarbeiten des ersten Ereignisses erzeugt wird, verarbeiten kann.

14. Host (h1, h2, h3, h4) in einem Netzwerk, das einen ereignisgesteuerten Programmierrahmen einsetzt, wobei der Host eine erste Warteschlange abonniert hat und zu Folgendem ausgelegt ist:
a) Bestimmen eines ersten Ereignisses in der ersten Warteschlange als ein Ereignis, das zu verarbeiten ist;
b) Bestimmen, ob das erste Ereignis vom Host (h1, h2, h3, h4) verarbeitet werden kann;
b1) wobei, wenn ja, der Host (h1, h2, h3, h4) ferner dazu ausgelegt ist, das erste Ereignis aus der ersten Warteschlange in eine lokale Warteschlange des Hosts (h1, h2, h3, h4) abzurufen;
c) Verarbeiten des ersten Ereignisses auf dem ersten Host (h1, h2, h3, h4);
d) Erzeugen eines zweiten Ereignisses als ein Resultat der Verarbeitung des ersten Ereignisses auf dem Host (h1, h2, h3, h4);
e) Bestimmen, ob das zweite Ereignis vom Host (h1, h2, h3, h4) verarbeitet werden kann;
e1) wobei, wenn ja, der Host (h1, h2, h3, h4) ferner dazu ausgelegt ist, das zweite Ereignis in der lokalen Warteschlange des Hosts (h1, h2, h3, h4) zu platzieren und dann das zweite Ereignis auf dem Host (h1, h2, h3, h4) zu verarbeiten,
e2) wobei, wenn nicht, der Host (h1, h2, h3, h4) ferner dazu ausgelegt ist, das zweite Ereignis einer Entität, die die erste Warteschlange führt, zu melden.

15. Host (h1, h2, h3, h4) nach Anspruch 14, der ferner zu Folgendem ausgelegt ist:
Erzeugen einer Statusanzeige für das zweite Ereignis und Melden des zweiten Ereignisses zusammen mit der Statusanzeige bei der Entität, die die erste Warteschlange führt, wenn das zweite Ereignis vom Host (h1, h2, h3, h4) verarbeitet werden kann,
wobei die Statusanzeige anzeigt, in welchem Umfang der Host (h1, h2, h3, h4) das zweite Ereignis verarbeitet hat.

## Revendications

1. Procédé de gestion d'événements dans un réseau qui adopte un cadre de programmation événementielle,
le réseau comprenant :
une pluralité d'hôtes distribués physiquement (h1, h2, h3, h4), dont chacun est configuré pour traiter au moins un événement dans le réseau,
au moins une première entité, configurée pour maintenir une première file d'attente comprenant une première pluralité d'événements à traiter par au moins un hôte appartenant à un premier groupe d'hôte(s), et au moins une seconde entité, configurée pour maintenir une seconde file d'attente comprenant une seconde pluralité d'événements à traiter par au moins un hôte appartenant à un second groupe d'hôte(s), dans lequel, le premier groupe d'hôte(s) comprend le second groupe d'hôte(s), et les hôtes sont catégorisés en groupes selon leur emplacement géographique ou des critères logiques, dans lequel, la première file d'attente est une file d'attente de niveau supérieur en comparaison avec la seconde file d'attente, et dans lequel un événement est récupéré depuis une file d'attente de niveau supérieur vers une file d'attente de niveau inférieur, jusqu'à ce que l'événement soit récupéré vers un hôte et traité sur l'hôte ;
le procédé comprenant des étapes consistant à :
a) déterminer (S2010) un premier événement dans la première file d'attente comme un événement qui doit être traité ;
b) déterminer (S2020) si le premier événement satisfait à une première condition, la première condition indiquant que le premier événement peut être traité par au moins un premier hôte appartenant au second groupe d'hôte(s) ;
b1) si oui, récupérer (S2030) le premier événement depuis la première file d'attente vers la seconde file d'attente,
c) traiter (S2040) le premier événement sur le premier hôte,
d) recevoir (S2050) un rapport d'un second événement qui est nouvellement généré par le traitement du premier événement sur le premier hôte ;
e) déterminer (S2060) si le second événement satisfait à une seconde condition, la seconde condition indiquant que le second événement peut être traité par au moins un second hôte appartenant au second groupe d'hôte(s),
e1) placer (S2070) le second événement dans la seconde file d'attente et traiter (S2080) ensuite le second événement au niveau du second hôte, si le second événement satisfait à la seconde condition ;
e2) rapporter le second événement à la première entité maintenant la première file d'attente, si le second événement ne satisfait pas à la seconde condition.

2. Procédé selon la revendication 1, dans lequel, le second groupe d'hôtes comprend un seul hôte, le premier hôte et le second hôte étant les mêmes, et la seconde file d'attente étant une file d'attente locale de l'hôte.

3. Procédé selon la revendication 1, dans lequel, la première condition inclut en outre le fait qu'une première fonction qui est exécutée pour traiter le premier événement soit stockée localement sur le premier hôte, et la seconde condition inclut en outre le fait qu'une seconde fonction qui est exécutée pour traiter le second événement soit stockée localement sur le second hôte.

4. Procédé selon la revendication 1, comprenant en outre des étapes consistant à :
e3) placer le second événement et un indicateur d'état du second événement dans la première file d'attente, si le second événement satisfait à la seconde condition,
dans lequel, l'indicateur d'état indique jusqu'à quel point le second groupe d'hôte(s) a traité le second événement,
l'étape a) comprenant en outre des étapes consistant à :
a1) déterminer jusqu'à quel point le second groupe d'hôte(s) a traité le second événement sur la base de l'indicateur d'état du second événement,
a11) empêcher que le second événement dans la première file d'attente ne soit déterminé comme un événement qui doit être traité, si l'indicateur d'état du second événement indique que le second groupe d'hôte(s) traite encore le second événement ou que le second groupe d'hôte(s) a traité avec succès le second événement ;
a12) déterminer le second événement dans la première file d'attente comme un événement qui doit être traité, si l'indicateur d'état du second événement indique que le second groupe d'hôte(s) ne peut pas traiter avec succès le second événement.

5. Procédé selon la revendication 4, dans lequel l'indicateur d'état indique au moins l'un parmi :
1) si le premier hôte a commencé par le traitement du second événement,
2) si l'écriture d'une donnée de sortie a commencé,
3) si le premier hôte a terminé par le traitement du second événement.

6. Procédé selon la revendication 1, l'étape c) comprenant en outre :
c1) la génération d'une première donnée de sortie,
l'étape d) comprenant en outre :
d1) la réception de la première donnée de sortie,
le procédé comprenant en outre des étapes consistant à :
e4) stocker la première donnée de sortie sur un second stockage de données qui est local au second groupe d'hôte(s), si le second événement satisfait à la seconde condition ;
e5) transférer la première donnée de sortie à un premier stockage de données qui est local au premier groupe d'hôtes, si le second événement ne satisfait pas à la seconde condition.

7. Procédé selon la revendication 4, l'étape e1) comprenant en outre :
- la génération d'une seconde donnée de sortie après le traitement du second événement au niveau du second hôte ;
l'étape e3) comprenant le stockage de la seconde donnée de sortie sur la première file d'attente comme un indicateur d'état du second événement indiquant que le traitement du premier événement est terminé.

8. Procédé selon la revendication 6, comprenant en outre une étape consistant à :
e6) stocker la première donnée de sortie sur le premier stockage de données qui est local au premier groupe d'hôtes, si le second événement satisfait à la seconde condition.

9. Procédé selon la revendication 6, comprenant en outre une étape consistant à :
- récupérer la première donnée de sortie et utiliser la première donnée de sortie pour traiter le second événement.

10. Procédé selon la revendication 8, comprenant en outre des étapes consistant à :
- générer des métadonnées à partir de la première donnée de sortie,
- écrire les métadonnées générées de la première donnée de sortie dans la première file d'attente comme un indicateur d'état du premier événement avant l'étape e6) pour indiquer que l'écriture de la première donnée de sortie commence.

11. Procédé selon la revendication 10, si le second groupe d'hôte(s) n'a pas réussi à traiter le premier événement avec succès, le procédé comprenant en outre des étapes consistant à :
g) déterminer (S4010) si les métadonnées de la première donnée de sortie ont été établies dans la première file d'attente, si oui, effectuer les étapes h)-j);
h) récupérer (S4020) la première donnée de sortie depuis le premier stockage de données et les métadonnées de la première donnée de sortie depuis la première file d'attente ;
i) déterminer (S4030) une métadonnée sur la base de la première donnée de sortie récupérée depuis le premier stockage de données, et
j) comparer (S4040) la métadonnée déterminée sur la base de la première donnée de sortie récupérée depuis le premier stockage de données et la métadonnée récupérée depuis la première file d'attente :
j1) s'il y a une correspondance, établir (S4050) un indicateur d'état du premier événement selon lequel le traitement du premier événement est terminé ;
j2) s'il n'y a pas de correspondance, le procédé revenant à l'étape a), déterminant le premier événement dans la première file d'attente comme un événement qui devra être traité.

12. Procédé selon l'une quelconque des revendications 1 à 10, comprenant en outre une étape avant l'étape b) :
- déterminer un flux de travail du premier événement, le flux de travail indiquant un événement subséquent qui sera généré par le traitement du premier événement ;
la première condition incluant en outre le fait que l'événement subséquent puisse être traité par au moins un second hôte appartenant au second groupe d'hôte(s).

13. Procédé selon l'une quelconque des revendications 1 à 10, comprenant en outre des étapes consistant à :
- déterminer un flux de travail du premier événement, le flux de travail indiquant un événement subséquent qui sera généré par le traitement du premier événement ;
- configurer le second groupe d'hôte(s) selon le flux de travail, de sorte que le second groupe d'hôte(s) puisse traiter le premier événement et l'événement subséquent qui sera généré par le traitement du premier événement.

14. Hôte (h1, h2, h3, h4) dans un réseau qui adopte un cadre de programmation événementielle, dans lequel, l'hôte s'abonne à une première file d'attente et est configuré pour :
a) déterminer un premier événement dans la première file d'attente comme un événement qui doit être traité ;
b) déterminer si le premier événement peut être traité par l'hôte (h1, h2, h3, h4) ;
b1) si oui, l'hôte (h1, h2, h3, h4) étant en outre configuré pour récupérer le premier événement depuis la première file d'attente vers une file d'attente locale de l'hôte (h1, h2, h3, h4) ;
c) traiter le premier événement sur l'hôte (h1, h2, h3, h4) ;
d) générer un second événement à la suite du traitement du premier événement sur l'hôte (h1, h2, h3, h4) ;
e) déterminer si le second événement peut être traité par l'hôte (h1, h2, h3, h4) ;
e1) si oui, l'hôte (h1, h2, h3, h4) étant en outre configuré pour placer le second événement dans la file d'attente locale de l'hôte (h1, h2, h3, h4) et traiter ensuite le second événement sur l'hôte (h1, h2, h3, h4),
e2) sinon, l'hôte (h1, h2, h3, h4) étant en outre configuré pour rapporter le second événement à une entité maintenant la première file d'attente.

15. Hôte (h1, h2, h3, h4) selon la revendication 14, configuré en outre pour :
générer un indicateur d'état pour le second événement et rapporter le second événement conjointement avec l'indicateur d'état à l'entité maintenant la première file d'attente, si le second événement peut être traité par l'hôte (h1, h2, h3, h4),
l'indicateur d'état indiquant jusqu'à quel point l'hôte (h1, h2, h3, h4) a traité le second événement.
